Europäisches Patentamt

European Patent Office

Office européen des brevets

(11) Publication number: **0 509 976 A2**

# EUROPEAN PATENT APPLICATION

(21) Application number: **92850087.5**

(22) Date of filing: **15.04.92**

(51) Int. Cl.5: **B66F 9/12**

(30) Priority: **15.04.91 SE 9101129**

(43) Date of publication of application:
**21.10.92 Bulletin 92/43**

(84) Designated Contracting States:
**DE ES FR GB IT SE**

(71) Applicant: **VUORENMAA, Pauli**
**Veppebyvägen 8**
**S-198 00 Balsta(SE)**

(72) Inventor: **VUORENMAA, Pauli**
**Veppebyvägen 8**
**S-198 00 Balsta(SE)**

(74) Representative: **Bjellman, Lennart Olov Henrik et al**
**DR. LUDWIG BRANN PATENTBYRA AB**
**Drottninggatan 7 Box 1344**
**S-751 43 Uppsala(SE)**

(54) **Hand pallet truck.**

(57) A pallet truck (1) for lifting and moving pallets comprises a main structure (6) which is supported on pivotal wheels (10), and two lifting arms (2, 3) which extend out from the main structure (6). The free, forward ends of the lifting arms (2, 3) are supported by wheels (4, 5). In addition to being raisable and lowerable between a loading/unloading position and a truck-moving position, the lifting arms can also be moved laterally towards and away from one another so as to adjust the spacing between the arms to suit pallets of mutually different sizes.

EP 0 509 976 A2

The present invention relates to pallet trucks, and more specifically to a pallet truck with adjustable fork spacing.

Present-day standardized pallets used for transporting different kinds of goods are much too large in some instances. This applies particularly to the case when goods are sold in stores directly from the pallet. For instance, the dimensions of standardized pallets are too large to enable such pallets to be transported along the passageways between the display gondolas and other goods-presentation fixtures in retail stores. Since these pallets are also large, the loads become so heavy as to make it difficult for personnel to pull loaded pallet trucks to their intended destinations. Furthermore, these heavy pallet transporters will often damage the floors on which they are moved.

In an endeavour to find a solution to the aforesaid problems, the standardized pallet has been divided into three smaller pallets which, combined, have the same size as the standardized pallet, wherein three such pallets together have the same length as a standardized pallet and the width of the standardized pallet corresponds to the length of each such smaller pallet. Three such smaller pallets can be handled by a standard pallet truck as a single pallet when placed side-by-side and when lifted from the short end, i.e. from one of the long sides of the smaller pallets. Thus, these smaller pallets, each carrying a third of the load of the combined pallets, can be readily moved to a desired position in a retail store or some similar confined space.

However, as yet there has not been provided a practical pallet truck for moving these smaller pallets, and hitherto the pallets have been moved with the aid of pallet trucks which, in the context of smaller pallets, are unnecessarily clumsy, these trucks having been in use for some considerable time. Attempts to modify existing pallet trucks so that the trucks are more suited to the smaller pallets have been unsuccessful. The smaller pallets are relatively narrow and consequently the pallet trucks must be highly stable so as to not to not topple while moving, particularly when negotiating a curve. These same pallet trucks shall also be suitable for use with the larger pallets where a greater demand is placed on the lifting ability of the trucks and, of course, adaptability between the two pallet types.

The object of the present invention is to solve the aforesaid problems. This object is achieved with a pallet truck of the kind defined in the Claims, in which the particular characteristic features of the invention are set forth.

The invention will now be described in more detail with reference to the accompanying drawings, in which

Figure 1      illustrates a pallet truck in perspective and from the front;

Figure 2      is a partially cut-away view taken on the line II-II in Figure 1;

Figure 3      is a partially cut-away view taken on the line III-III in Figure 2;

Figure 4      is a schematic view from above of the combined steering and pump mechanism;

Figure 5      is a schematic, sectioned view illustrating the mechanism for transmitting a lifting movement from a jack to the lifting arms of the pallet truck; and

Figure 6      is a schematic section view of the mechanism by means of which wheels located at the forward ends of the lifting arms are lowered as the arms are lifted.

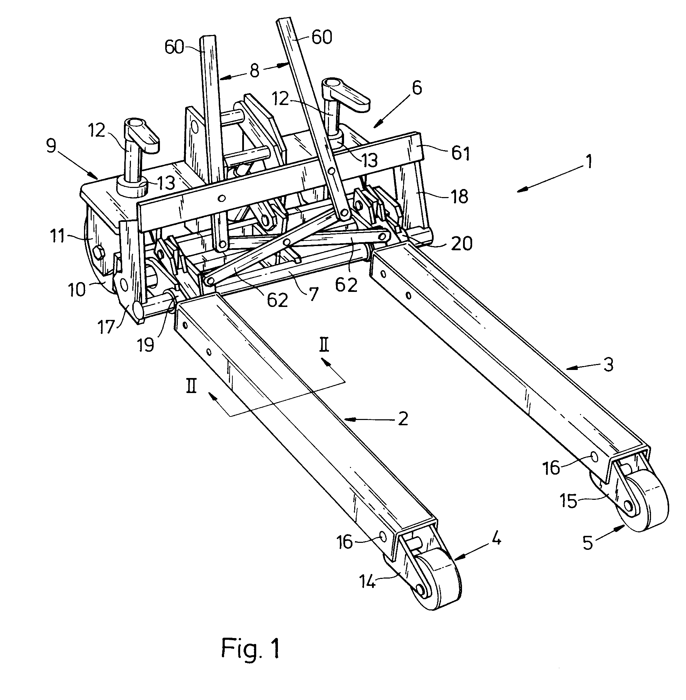

Figure 1 is a schematic, perspective view of an inventive pallet truck 1. The illustrated pallet truck comprises basically a pair of lifting arms 2, 3, wheels 4, 5 carried by the forward, free ends of the lifting arms, and a main structure 6 which is attached to the rear ends of the arms 2, 3 and which includes the mechanisms for lifting, lowering and steering the pallet truck 1. The lifting arms 2, 3 can be moved in parallel towards and away from each other along a bar 7 whose ends are mounted firmly in the main structure 6.

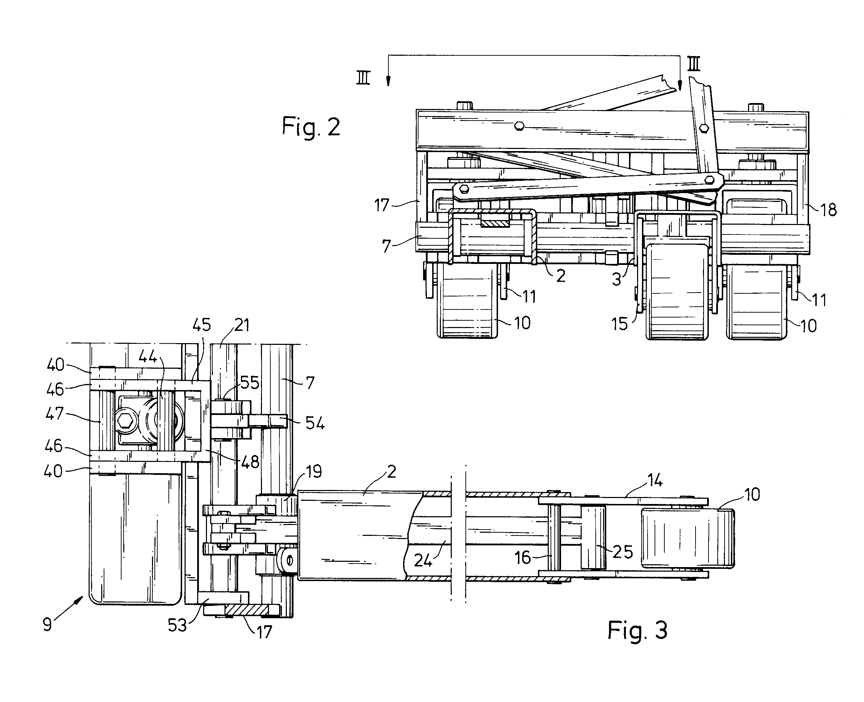

As will be seen from Figures 1, 2 and 3, the truck also includes a linkage arm system 8 which facilitates movement of the arms 2, 3 towards and away from one another so as to adapt the lateral spacing of the arms to the size of the pallet to be lifted. The main structure 6 includes a fixed part 9 which is carried by a pair of wheels 10, each of which is journalled in a respective rotatable holder 11 provided with a vertically extending rotational shaft 12 which extends up through a journal bearing 13 in the fixed part 9. The wheels are mutually connected with a rod which is used partly for raising and lowering the lifting arms and partially for swinging or turning the wheels 10. The front wheels 4 and 5 are journalled in cradles 14, 15 which, in turn, are pivotally mounted on a shaft 16 fitted to a respective lifting arm 2, 3.

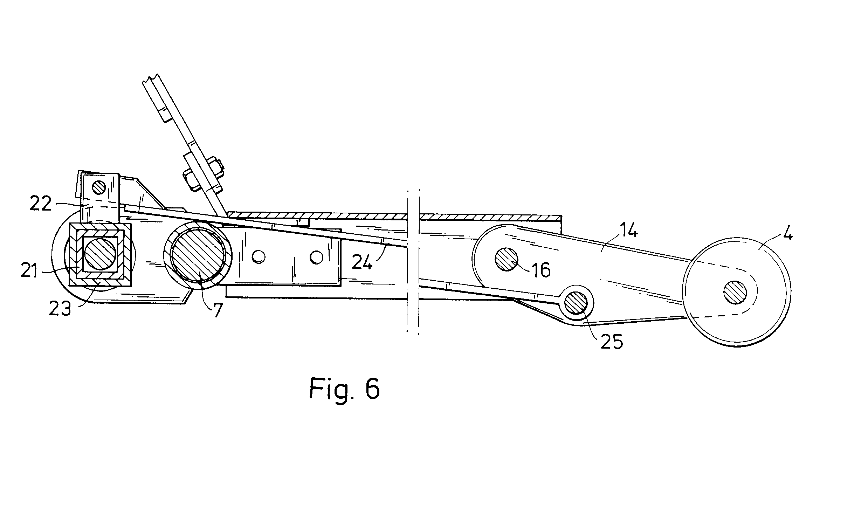

The bar 7 is firmly attached, e.g. welded, to a pair of side members 17, 18 of the main structure 6. The side members 17, 18 are, in turn, attached to a shaft 21 which is journalled for rotation in the side members 17, 18. End elements 19, 20 on the inner ends of respective arms 2, 3 are journalled for movement around the bar 7 and around the shaft 21. As shown in Fig. 6, the shaft 21 has a square cross-section and, as will be evident from the following description, as it rotates, functions, among other things, to dog a pair of upwardly projecting pulling arms 22, which are attached to a sleeve 23 which extends around the shaft 21 and whose cross-sectional shape is complementary to that of the shaft 21. A pull rod 24 extends within respective lifting arms 2, 3 from the pulling arms 22 to an attachment 25 in the cradle 14, this attachment 25 being located between the shaft 16 and the axle of wheel 4. When the pulling arm 22 is swung backwards away from the arms 2, 3 as said arms are lifted, this movement is transmitted via the pull rod 24 to respective cradles 14, 15, which are swung rearwardly-downwardly and therewith lift the forward ends of the lifting arms 2, 3 to the same extent as that to which the rear ends of said arms are lifted at the main structure 6. Consequently, the lifting arms 2, 3 will always be held essentially parallel to the truck supporting surface, or floor.

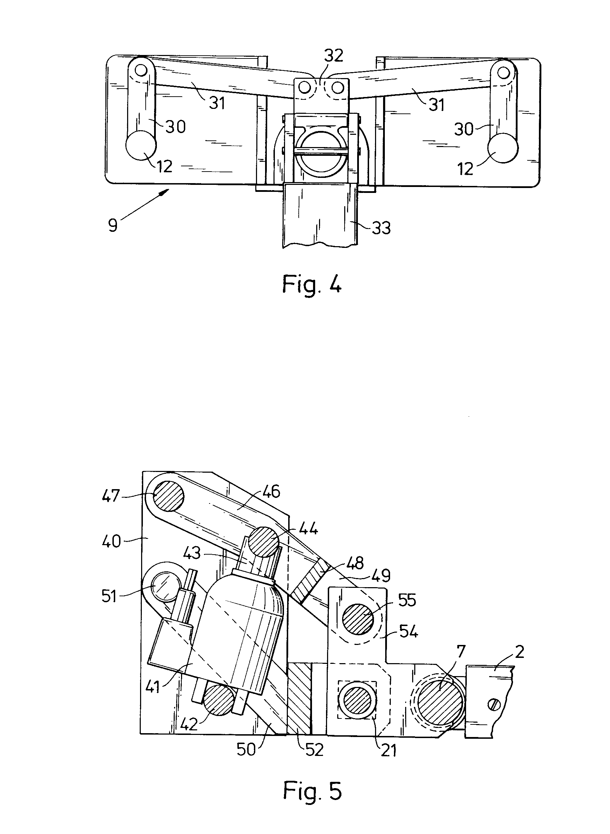

Figure 4 illustrates schematically how swinging or turning of the wheels 10 is achieved. The rotational axles 12 of the wheels 10 thus project up through the fixed part 9 of the main structure 6, one at each end of said fixed part. Mounted on the rotational shafts 12 is a pair of outwardly projecting members 30 which are fixedly attached by welds, for instance. The free end of each member 30 is pivotally connected to a respective rod 31, which in turn is pivotally connected to an element 32 pivotally journalled to the fixed part 9.

The element 32 is connected in a conventional manner to a rod or bar 33, which is used to pull the pallet truck 1, to steer the truck and also to pump-up and to pressure-relieve a jack, when lifting and lowering the lifting arms 2, 3 of the pallet truck 1. When the rod 33 is rotated, or twisted, all of the wheels 10 will turn in a commensurate direction. This structure enables the two wheels 10 to be spaced far apart, therewith providing great stability to the inventive pallet truck, even though the lifting arms 2, 3 should be placed relatively close to one another.

Figure 5 illustrates the arrangement for lifting and lowering the lifting arm 2 and also the lifting arm 3, this latter arm not being shown in the Figure. A jack 41 is mounted between two generally parallel and vertical walls 40 included in the fixed part 9 of the main structure 6 and placed generally midway thereof. The lower end of the jack 41 rests pivotally on a pin 42 which extends between the walls 40 and is attached thereto. The outwardly projecting end of the piston 43 of the jack 41 rests pivotally on a pin 44 which extends between the legs 46 of a U-shaped element 45. The free ends of the legs 46 are pivotally journalled on a journal pin 47 which, in turn, extends between the walls 40 and is firmly attached thereto. Thus, when the jack 41 is placed under pressure, the U-shaped element 45 will be swung upwards at its web part 48 and will be lowered when pressure in the jack 41 is relieved. Two lugs 49 project outwards from the approximate centre of the web 48.

Two pivot arms 50 are mounted between the walls 40, one on each side of the jack 41, and are pivotally mounted on the jack by means of a pivot pin 51 which, in turn, is mounted on the walls 40 immediately beneath the pin 47. The other ends of the pivot arms 50 are fixedly attached, e.g. welded, to an elongated rod 52 which extends parallel with the shaft 21 and the bar 7 and which terminates in end-pieces 53 which extend parallel with respective side members 17, 18 and which are fixedly attached to the square shaft 21.

One end of an L-shaped element 54 is inserted between the lugs 49 and is pivotally connected thereto by means of a pin 55, while the other end of said L-shaped element is fixedly attached to the bar 7, e.g. welded thereto. The angled part of the L-shaped element 54 is pivotally mounted to the shaft 21. The arrangement is such that when the jack 41 is placed under pressure or relieved of pressure, the L-shaped element 55 will move either up or down in relation to the surface on which the pallet truck is supported, parallel with a plane extending through the pins 47 and 51. The bar 7 is thus lifted and lowered together with the inner ends of the lifting arms 2, 3. At the same time, however, the shaft 21 and the pulling arms 22 are swung rearwardly, and the pull rod 24 transmits this pulling force to the wheel cradles 14, 15, causing the wheels 4, 5 to be swung down and therewith lift the forward ends of the lifting arms to the same extent as that to which the inner ends of said arms are lifted.

As previously mentioned, the end elements 19, 20 mounted on the inner ends of the lifting arms are journalled on the bar 7 in a manner which enables the lifting arms 2, 3 to be readily moved along the bar 7. For the sake of stability, however, the end elements 19, 20 also extend around the shaft 21. Lateral movement of the lifting arms 2, 3 is limited by the side members 17, 18 mounted on the sides of the main structure 6 and the L-shaped element 54 mounted centrally of the fixed part 9.

Displacement of the lifting arms 2, 3 towards and away from one another may be achieved in any one of a number of ways, for example with the aid of a manually operated or motor-driven screw mechanism. Naturally, the lifting arms may be also moved in other respects with the aid of a suitable motor, as is normal in the case of pallet trucks. In the case of the illustrated embodiment, the lifting arms 2, 3 are displaced with the aid of a pair of levers 60 forming part of a linkage system 8. The levers 60 are journalled for rotation in a transverse beam 61 which extends between the side members 17, 18 and which is firmly attached to said side members, e.g. welded thereto. The parts of the levers 60 which project up over the transverse beam 61 therewith form operating handles, whereas the lever parts located beneath the transverse beam 61 are pivotally connected to a pull rod 62 which, in turn, is pivotally connected to respective lifting arms 2, 3 adjacent their end elements 19, 20. This provides a transmission which enables the lifting arms 2, 3 to be displaced laterally by hand, even when the lifting arms support a load.

Thus, the present invention achieves the aforesaid object of providing a small topple-proof pallet truck provided with readily adjustable lifting arms which enable the truck to be used to transport both large and small pallets. The person skilled in this art will realize that different parts of the pallet truck can be modified within the scope of the following Claims.

## Claims

1. A pallet truck (1) for lifting and moving pallets, comprising a main structure (6) which is supported by pivotal wheels 10, and a pair of mutually parallel lifting arms (2, 3) which extend outwardly from the main structure and the forward, free ends of which are supported by wheels (4, 5), and in which the lifting arms (2, 3) can be raised and lowered, **characterized** by means for adjusting the spacing between the lifting arms (2, 3).

2. A pallet truck according to Claim 1**, characterized** in that the lifting arms (2, 3) are mounted for movement along a bar (7) which forms part of the main truck structure (6).

3. A pallet truck according to Claim 1 or 2, **characterized** in that the lifting-arm supporting wheels (4, 5) are journalled in a pivotal cradle (14, 15); in that pivotal movement of the cradles (14, 15) and therewith raising and lowering of the lifting arms (2, 3) is transmitted from the main structure (6) to the cradle (14, 15) through a pull rod (24); and in that the lifting arms (2, 3) are raised and lowered to mutually the same extent at both ends thereof.

Fig. 1

Fig. 2

Fig. 3

Fig. 4

Fig. 5

Fig. 6